Europäisches Patentamt

European Patent Office

Office européen des brevets

(11) Veröffentlichungsnummer: **0 332 196 B1**

# (12) EUROPÄISCHE PATENTSCHRIFT

(45) Veröffentlichungstag der Patentschrift:
16.10.91 Patentblatt 91/42

(51) Int. Cl.⁵: **G01P 3/44, B60T 8/88**

(21) Anmeldenummer: **89104216.0**

(22) Anmeldetag: **09.03.89**

(54) **Verfahren und Vorrichtung zum Messen der Drehzahl eines Rades in einer blockiergeschützten Fahrzeugbremsanlage.**

(30) Priorität: **09.03.88 DE 3807798
18.04.88 DE 3812904**

(43) Veröffentlichungstag der Anmeldung:
**13.09.89 Patentblatt 89/37**

(45) Bekanntmachung des Hinweises auf die
Patenterteilung:
**16.10.91 Patentblatt 91/42**

(84) Benannte Vertragsstaaten:
**DE ES FR GB IT SE**

(56) Entgegenhaltungen:
**DE-A- 3 200 529
FR-A- 2 472 221
GB-A- 2 183 846
PATENT ABSTRACTS OF JAPAN, Band 9, Nr.
79 (P-347)[1802], 9. April 1985; & JP-A-59 210
371 (NISSAN JIDOSHA K.K.) 29-11-1984
PATENT ABSTRACTS OF JAPAN, Band 10, Nr.
149 (P-461)[2206], 30. Mai 1986; & JP-A-61 3067
(HITACHI SEISAKUSHO K.K.) 09-01-1986**

(73) Patentinhaber: **LUCAS INDUSTRIES public
limited company
Great King Street
Birmingham, B19 2XF West Midlands (GB)**

(72) Erfinder: **Braschel, Volker
Fliedergarten 57
W-5450 Neuwied 1 (DE)**
Erfinder: **Seitz, Dieter
Fliedergarten 49
W-5450 Neuwied 1 (DE)**

(74) Vertreter: **von Hellfeld, Axel, Dipl.-Phys. Dr. et
al
Wuesthoff & Wuesthoff Patent- und
Rechtsanwälte Schweigerstrasse 2
W-8000 München 90 (DE)**

## Beschreibung

Die Erfindung betrifft eine Vorrichtung und ein Verfahren zum Messen der Drehzahl eines Rades in einer blockiergeschützten Fahrzeugbremsanlage mit einem Drehzahlfühler, in dem entsprechend der Drehzahl des Rades elektromagnetische Signale induziert werden, deren Amplitude und Frequenz regulär mit der Drehzahl wachsen.

Die Funktionstüchtigkeit einer Blockierschutzanlage für Bremsen (ABS) hängt unter anderem wesentlich davon ab, ob die das Rad-Drehverhalten überwachenden Drehzahlfühler genaue Meßwerte liefern. Liefern die Drehzahlfühler ungenaue Meßergebnisse, so kann die ABS-Anlage nicht funktionieren.

Es ist deshalb bereits im Stand der Technik auch schon vorgesehen worden, die Drehzahlfühler der blockiergeschützt gebremsten Räder zu überwachen. So ist es bekannt, für jeden Drehzahlfühler einen synchronisierbaren, astabilen Multivibrator vorzusehen, der bei angeschlossenem Drehzahlfühler und bei stehendem Rad mit einer im Vergleich zur bei drehendem Rad auftretenden Meßimpuls-Folgefrequenz niedrigen Eigenfrequenz schwingt und dessen Eigenschwingung bei Kurzschluß am Eingang und/oder bei offenem Eingang aussetzt.

Es ist auch bekannt, die Funktionstüchtigkeit eines ABS-Drehzahlfühlers derart zu prüfen, daß in Abhängigkeit von der Fahrzeuggeschwindigkeit Zeitspannen ermittelt werden, in denen keine Meßimpulse von den Drehzahlfühlern empfangen werden.

Schließlich ist zur Überwachung der Funktionstüchtigkeit von Drehzahlfühlern auch vorgeschlagen worden, währen einer Anfahrphase die Geschwindigkeit festzustellen, bei welcher die den einzelnen Rädern zugeordneten Drehzahlfühler jeweils ein Meßsignal erzeugen, dessen Amplitude über einem Schwellenwert liegt. Liegt diese Geschwindigkeit unter einem vorgegebenen Wert, so wird dasjenige Rad aus der ABS-Regelung ausgenommen, dessen Drehzahlfühler das unzureichende Signal erzeugt hat.

Die bei ABS-Anlagen verwendbaren Drehzahlfühler sind dem Fachmann bekannt (siehe z.B. BOSCH TECHNISCHE BERICHTE, Bd. 7, 1980, Heft 2, S. 84). Verwendet werden zur Zeit und auch mit der vorliegenden Erfindung bevorzugt nach dem magnetischen Induktionsprinzip arbeitende Drehzahlfühler. Dreht sich eine dem Fühler zugeordnete Zahnscheibe, so ändert sich der magnetische Fluß am Sensor und es wird eine etwa sinusförmige Wechselspannung in einer Spule des Fühlers induziert. Die Frequenz der induzierten Spannung ist ein Maß für die Drehgeschwindigkeit des überwachten Rades.

Da die induzierte Spannung abhängig ist von der zeitlichen Änderung des magnetischen Flusses, wächst mit zunehmender Drehgeschwindigkeit des Rades nicht nur die Frequenz der induzierten Wechselspannung an, sondern auch ihre Amplitude. Bei geringen Drehzahlen wird also das Meßsignal schwächer.

Bekannt sind unter anderem axiale und radiale Anordnungen von Zahnkranz und Spule.

Das derart gewonnene Drehzahl-Meßsignal kann auf vielfältige Weise gestört und verfälscht werden. Insbesondere kann sich ein Luftspalt zwischen der Zahnscheibe und dem elektrischen Leiter, in welchem die Induktion erzeugt wird, im Laufe der Zeit ändern. Auch durch Verschmutzung, Rost oder dergleichen können die magnetisch induzierten Signale verfälscht werden.

Aus der DE-A 3200529 ist es bekannt, bei einem Drehzahlfühler der hier beschriebenen Art Störschwingungen zu unterdrücken. Hierzu wird in Abhängigkeit von der Zeit der jeweilige Spitzenwert der Amplitude gemessen und eine Referenzgröße korrigiert.

Die Messung der Drehzahl eines blockiergeschützt gebremsten Rades kann aber auch noch durch andere Einflüsse verfälscht werden. So ist es möglich, daß aufgrund von insbesondere Resonanzschwingungen von schwingungsfähigen Teilen nahe dem Drehzahlfühler, insbesondere das sogenannte Bremsenquietschen, ein Signal des Drehzahlfühlers Oberschwingungen enthält, die dem eigentlichen Meßsignal überlagert sind. Durch solche Oberschwingungen kann die Anzahl der Null-Durchgänge des elektromagnetisch induzierten Signals erhöht werden, was fälschlich eine Erhöhung der Frequenz des Signals anzeigt, ohne daß sich die Drehzahl des Rades erhöht hat.

Der Erfindung liegt die Aufgabe zugrunde, hier Abhilfe zu schaffen und in der vorstehend beschriebenen Weise erzeugte Fehlsignale zu vermeiden.

Hierzu ist bei einem Verfahren zum Messen der Drehzahl eines Rades in einer blockiergeschützten Fahrzeugbremsanlage mit einem Drehzahlfühler, in dem entsprechend der Drehzahl elektromagnetische Signale induziert werden, deren Amplitude und Frequenz regulär mit der Drehzahl wachsen, vorgesehen, daß dann, wenn die Amplitude des Signals nicht mit seiner Frequenz wächst, die Amplitude zur Gewinnung der Drehzahl-Meßwerte herangezogen wird.

Dieser erfindungsgemäßen Lösung des oben skizzierten Problems der Oberschwingungen liegt die Erkenntnis zugrunde, daß dann, wenn die Amplitude des elektromagnetisch im Drehzahlfühler induzierten Signals nicht mit seiner Frequenz wächst, der Frequenzanstieg nicht durch eine Erhöhung der Drehzahl des Rades bedingt ist, sondern durch Störsignale, z.B. durch Oberschwingungen. In diesem Fall entspricht also die gemessene Frequenz nicht mehr der eigentlichen Drehzahl des Rades, sondern zeigt fälschlich eine wesentlich höhere Drehzahl an. Die Amplitude hingegen wird durch die Oberschwingungen nicht wesentlich verfälscht, insbesondere dann nicht, wenn eine gewisse Mittelwertbildung über Zeiträume erfolgt, die zwar kleiner sind als die Periode des elektromagnetisch induzierten Signals, aber größer als die Periode der störenden Oberschwingungen.

In einer Variante des vorstehend beschriebenen Verfahrens zum Ausschalten von durch Oberschwingungen bedingten Meßfehlern ist vorgesehen, daß dann wenn die Amplitude des Signals nicht mit seiner Frequenz wächst, die zuletzt gemessene Frequenz des induzierten Signals zur Gewinnung der Drehzahl-Meßwerte herangezogen wird, bei der die Amplitude noch mit der Frequenz gewachsen war.

Dieser Variante der Erfindung liegt die Erkenntnis zugrunde, daß die obengenannten Oberschwingungen in der Regel plötzlich auftreten und mit einer deutlichen Steigerung der Frequenz des induzierten Signals einhergehen. Wenn ein solcher Frequenzsprung stattfindet, also die Amplitude des induzierten Signals nicht mehr proportional seiner Frequenz ist, wird die Messung sozusagen auf den zuletzt gemessenen, korrekten Meßwert "eingefroren", d.h. es werden die Größen herangezogen, die gemessen wurden, als die Amplitude noch regulär mit der Frequenz anstieg. Hierzu kann sowohl der "eingefrorene" Wert der Frequenz als auch bevorzugt der Wert der Amplitude herangezogen werden, welche kontinuierlich mit hoher Taktzahl im Prozessor der ABS-Anlage abgespeichert werden.

Es ist auch möglich, durch ein Filter plötzlich auftretende Frequenzänderungen auszufiltern. Das Filter kann geschwindigkeitsabhängig sein.

Weiterhin liegt der vorliegenden Erfindung die Erkenntnis zugrunde, daß die Drehzahlfühlern der beschriebenen Art das Meßergebnis sehr stark temperaturabhängig sein kann. Insbesondere erhöht sich der Innenwiderstand des Drehzahlfühlers, so daß Schwankungen der Amplitude des elektromagnetisch induzierten Signals auftreten. Die vorliegende Erfindung schafft auch hier Abhilfe.

Gemäß einer bevorzugten Ausgestaltung der Erfindung ist vorgesehen, daß Schwankungen des Innenwiderstandes des Drehzahlfühlers (10) mit wachsender Temperatur das Meßergebnis bezüglich der Drehzahl im wesentlichen nicht beeinflußt.

Bevorzugt wird hierzu ein Impedanzwandler verwendet. Der Impedanzwandler simuliert einen sehr hohen Widerstand von z.B. 100 Kiloohm im Meßkreis zwischen dem Drehfühler und der Auswerteschaltung. Der vom Impedanzwandler erzeugte Widerstand von z.B. 100 Kiloohm ist sehr groß im Verhältnis zu dem Innenwiderstand des Drehzahlfühlers und dem Eingangswiderstand der Auswerteschaltung. Deshalb fallen temperaturabhängige Änderungen des Innenwiderstandes des Drehzahlfühlers nicht ins Gewicht.

Nachfolgend wird ein Ausführungsbeispiel der Erfindung anhand der Zeichnung näher erläutert. Es zeigt:

| | |
|---|---|
| Fig. 1 | schematisch den Verlauf der mittels eines bekannten Drehzahlfühlers induktiv erzeugten Wechselspannung in Abhängigkeit von der Geschwindigkeit des Fahrzeuges ; |
| Fig. 2 | den Verlauf der induzierten Wechselspannung bei konstanter Fahrzeuggeschwindigkeit, aber unterschiedlichen Luftspalten zwischen dem Zahnring und der Spule des Sensors ; |
| Fig. 3 | ein Blockschaltbild einer Schaltung zum Überwachen eines Drehzahlfühlers ; |
| Fig. 4 | ein abgeändertes Blockschaltbild einer Schaltung zum Überwachen eines Drehzahlfühlers ; |
| Fig. 5a | schematisch den Verlauf einer induzierten Wechselspannung einschließlich einer störenden Oberschwingung ; |
| Fig. 5b und 5c | das bei einem Verlauf der induzierten Wechselspannung gewonnene digitale Meßsignal; |
| Fig. 6 | ein Blockschaltbild einer Vorrichtung zum Messen der Drehzahl eines blockiergeschützt gebremsten Rades ; |
| Fig. 7 | schematisch unterschiedliche Verläufe der Amplitude (Spannung) eines in einem Drehzahlfühler elektromagnetisch induzierten Signals in Abhängigkeit von der Drehzahl (Frequenz) ; |
| Fig. 8 | schematisch ein Schaltbild zur Illustrierung der herrschenden Innenwiderstände bei einer bekannten Schaltung zum Messen einer Drehzahl ; und |
| Fig. 9 | schematisch ein Schaltbild einer erfindungsgemäßen Schaltungsanordnung zum Messen einer Drehzahl. |

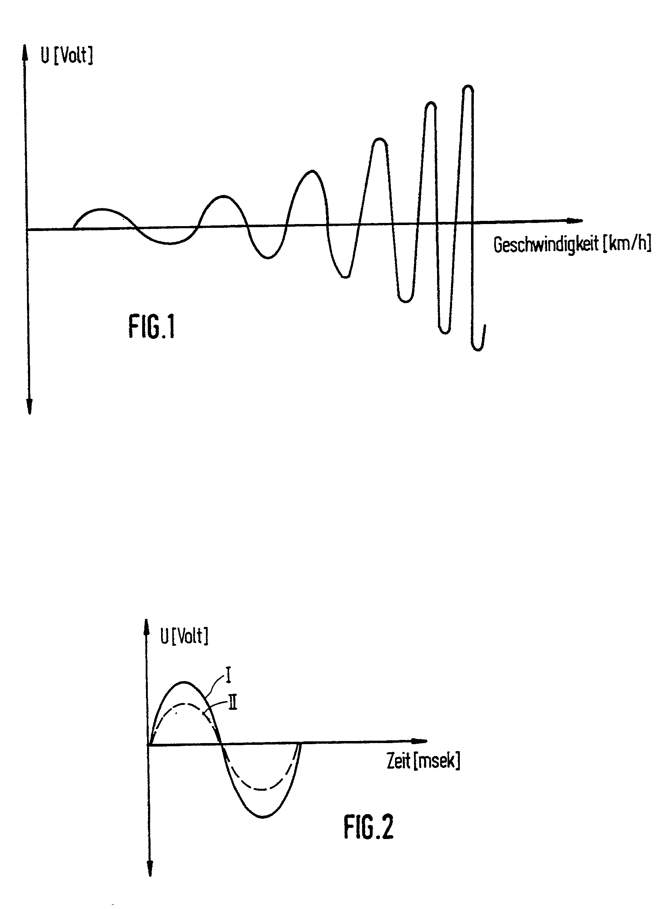

Fig. 1 zeigt den oben bereits erläuterten Zusammenhang zwischen der Fahrzeuggeschwindigkeit und der im Drehzahlfühler induktiv erzeugten Wechselspannung. Mit zunehmender Geschwindigkeit des Fahrzeuges, also zunehmender Drehzahl des überwachten Rades, steigt die Frequenz des induzierten Wechselspannungssignales an und ebenso seine Amplitude. Der Zusammenhang ist linear.

Vergrößert sich der Luftspalt zwischen der den magnetischen Fluß erzeugenden Zahnscheibe und dem Leiter, in dem die Spannung induziert wird, so fällt die Amplitude ab. Fig. 2 zeigt für einen kleinen Luftspalt, also einen gut funktionstüchtigen Drehzahlfühler, die induzierte Spannung gemäß Kurve I, während bei vergrößertem Luftspalt oder einer auf andere Weise beeinträchtigten Induktion die Amplitude für die gleiche Drehgeschwindigkeit des Rades gemäß Kurve II abfällt.

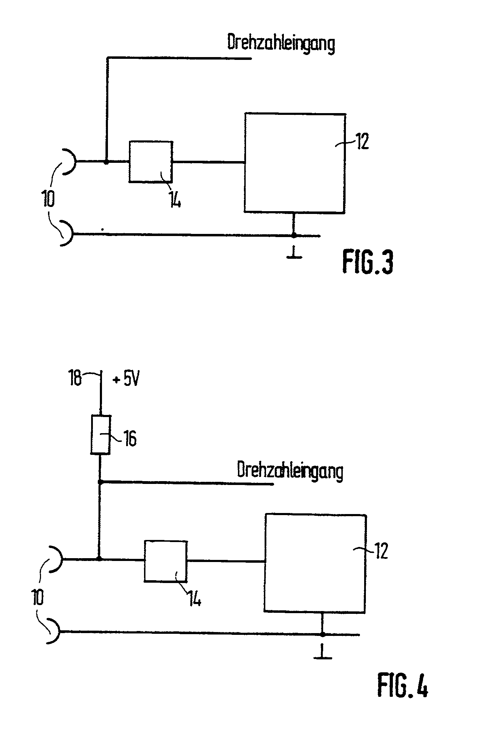

Fig. 3 zeigt ein Blockschaltbild einer Schaltung zum Überwachen eines Drehzahlfühlers 10. Die analogen Ausgangssignale des Drehzahlfühlers gemäß den Fig. 1 und 2 werden in einen Maximalwert-Speicher 14 gegeben. Statt des Maximalwert-Speichers 14 kann auch entsprechend ein Mittelwertspeicher vorgesehen sein. Der Speicher 14 registriert also nur den Maximalwert des Analogsignales, also die Amplitude. Das Analogsignal wird digitalisiert und in den Prozessor 12 einer ABS-Anlage eingegeben und dort mit dem zuvor abgespeicherten Soll-Wert für die gleiche Fahrzeuggeschwindigkeit verglichen. Der Vergleich erfolgt also jeweils zwischen einem Soll-Wert, der für eine bestimmte Fahrzeuggeschwindigkeit gilt und dem bei dieser Fahrzeuggeschwindigkeit aktuell gemessenen Meßwert des Drehzahlfühlers 10. Die Fahrzeuggeschwindigkeit wird in üblicher Weise anders als mit dem Drehzahlfühler 10 gemessen.

Das im Mikroprozessor 12 abgelegte Programm enthält unterschiedliche Toleranzschwellen bezüglich des Vergleichs. Bei solchen Unterschieden zwischen den verglichenen Werten, die zwar auf eine Veränderungen der magnetischen Induktion im Drehzahl-Fühler schließen lassen, aber die Funktionstüchtigkeit der ABS-Anlage noch nicht gefährden, wird dem Fahrer optisch und/oder akustisch eine Warnung gegeben, so daß er den Drehzahlfühler überprüfen und gegebenenfalls austauschen lassen kann. Bei größeren Abweichungen wird die zugeordnete ABS-Anlage ausgeschaltet.

Es ist auch möglich, die Amplituden der von den verschiedenen Drehzahlfühlern der einzelnen Räder erzeugten Wechselspannungssignale miteinander zu vergleichen, da es sehr unwahrscheinlich ist, daß alle Drehzahlfühler gleichzeitig ihre Funktion gleichmäßig ändern.

Fig. 4 zeigt eine Weiterbildung der Schaltung gemäß Fig. 3, wobei der Radsensor gleichzeitig auch auf Stromfluß überwacht werden kann. Hierzu wird bei 18 über einen Widerstand ein Strom in den Sensor eingespeist. Auf diese Weise kann der Drehzahlfühler über eine Spannungsmessung auf Unterbrechung und/oder Kurzschluß geprüft werden.

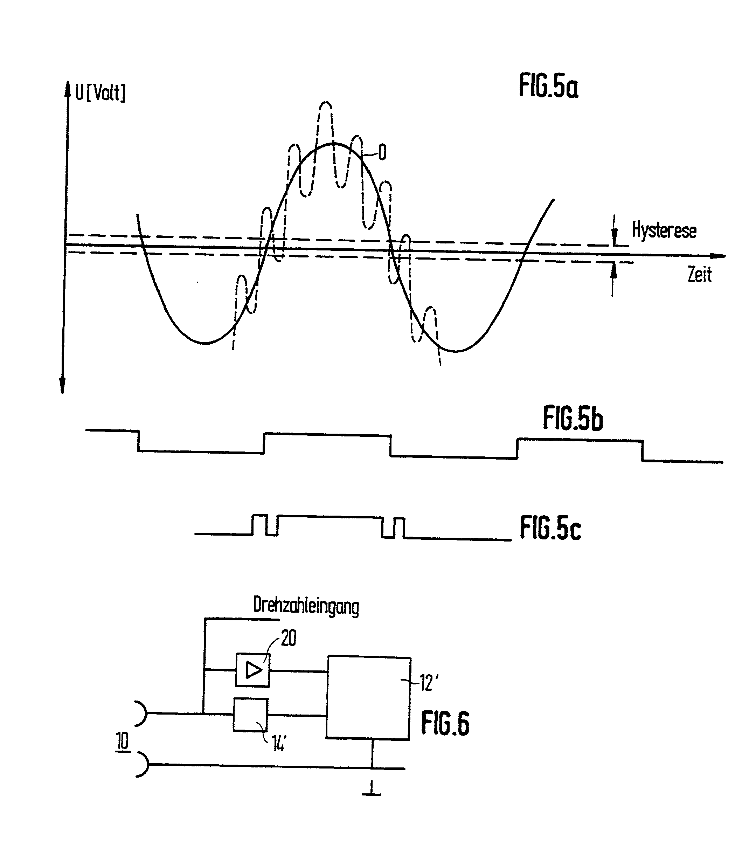

Die Fig. 5a, b und c zeigen über einer gemeinsamen Zeitskala verschiedene Signale. In Fig. 5a ist der Verlauf des elektromagnetisch im Drehzahlfühler induzierten Signals bei in etwa konstanter Geschwindigkeit (Drehzahl) aufgetragen. Das induzierte Meßsignal ist durch die eingangs beschriebenen Oberschwingungen verfälscht, welche durch Resonanzschwingungen von Massen im oder am Drehzahlfühler verursacht sind. Die Oberschwingungen O weisen typischerweise eine wesentlich höhere Frequenz auf als das elektromagnetisch induzierte Signal. Wie sich aus den Fig. 5a, b und c ergibt, erzeugen die Oberschwingungen O eine Verfälschung des Signals. In Fig. 5b ist das "reguläre" Frequenz-Meßsignal aufgetragen. Hierzu passiert das induzierte Analogsignal einen Eingangsverstärker, der ein digitalisiertes Signal abgibt. Die Oberschwingungen O erzeugen eine Erhöhung der Anzahl der Null-Durchgänge gemäß Fig. 5c.

Erfindungsgemäß werden die vorstehend anhand Fig. 5a erläuterten, möglichen Fehlsignale dadurch vermieden, daß in dem zur Auswertung der Meßsignale vorgesehenen Mikroprozessor überwacht wird, ob die Amplitude des elektromagnetisch induzierten Signals gemäß einer vorgegebenen Proportionalität mit der Frequenz (Drehzahl) anwächst. Bei Auftreten der in Fig. 5 gezeigten Oberschwingungen O ist dies nicht der Fall, da ohne einen Anstieg der Amplitude es zu einem plötzlichen Anstieg der Frequenz kommen kann, siehe Fig. 5c. Dies wertet der Mikroprozessor dahingehend, daß ein Fehlsignal gemäß Fig. 5a aufgetreten ist. Damit trotzdem eine zuverlässige Messung der Drehzahl möglich ist, wird in diesem Falle nicht zur Messung der Drehzahl die Frequenz des elektromagnetisch induzierten Signals herangezogen, sondern seine Amplitude, d.h. die Spitzenwerte der gemessenen Spannung.

In Abwandlung des vorstehend beschriebenen Beispieles der Erfindung kann zur Vermeidung von durch beispielsweise Oberschwingungen O gemäß Fig. 5a bewirkten Meßfehlern vorgesehen, sein, daß dann, wenn die Amplitude des Signals nicht mit seiner Frequenz wächst, die zuletzt gemessene Frequenz des induzierten Signals zur Gewinnung der Drahzahl-Meßwerte herangezogen wird. Mit anderen Worten : Die Bestimmung der Drehzahl erfolgt auf der Basis der zuletzt gemessenen Frequenz, bei der die Amplitude des induzierten Signals noch mit der Frequenz gemäß einer vorgegebenen Proportionalität gewachsen war. Der die Auswertung der Meßdate durchführende Prozessor wird entsprechend programmiert.

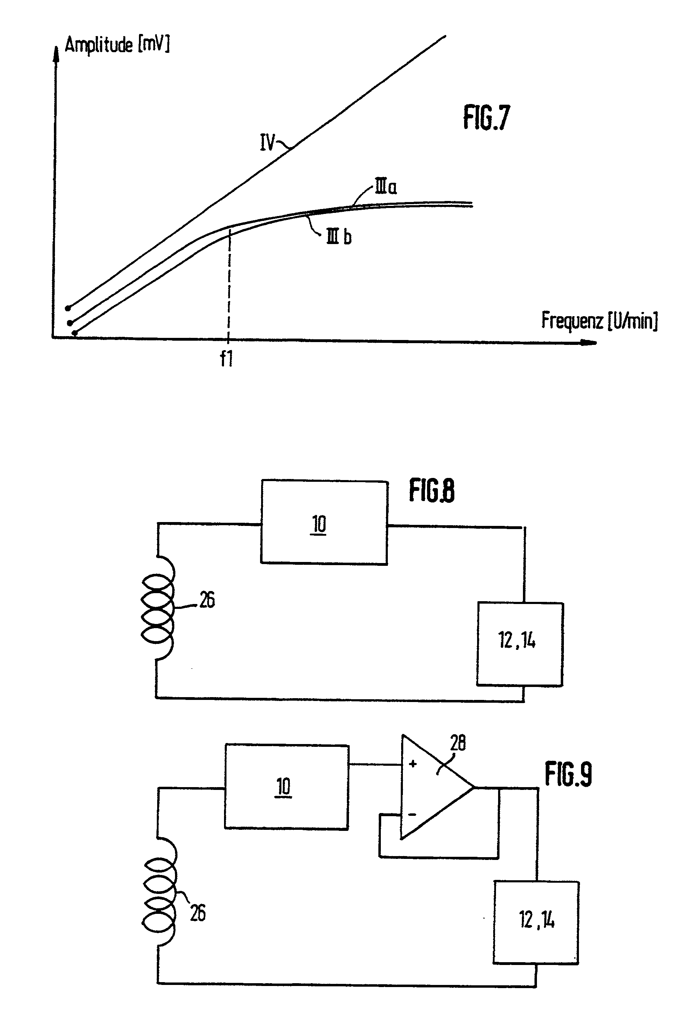

Fig. 6 zeigt ein Blockschaltbild gemäß einer Abwandlung der in den Fig. 3 und 4 gezeigten Schaltung. Einander entsprechende Bauteile sind mit gleichen Bezugszeichen versehen. Im Speicher 14 werden Spitzenwerte bezüglich des für die Messung herangezogenen Meßsignals (Amplitude und/oder Frequenz des induzierten Signals) gespeichert und dem Prozessor 12 zugeführt. Im Prozessor 12 werden die aktuellen Meßwerte mit den abgespeicherten Sollwerten verglichen. Der Eingangsverstäker 20 digitalisiert das Signal gemäß den Fig. 5b, c.

Fig. 7 zeigt schematisch Kurven IIIa, IIIb und IV, gemäß denen die Amplitude des im Drehzahlfühler induzierten Signals von der Drehzahl (Frequenz) abhängen kann. Die Amplitude ist die jeweils im Drehzahlfühler induzierte Spannung.

Kurve IIIa zeigt bei einer Frequenz $f_1$ eine "Sättigung" der Amplitude, d.h. mit zunehmender Frequenz steigt die Amplitude nicht mehr oder kaum noch an. Diese Erscheinung ist darauf zurückzuführen, daß die Amplitude durch den Eingangswiderstand der Signal-Auswerteschaltung belastet wird (hohe Impedanz). Kurve IIIb zeigt den Amplitudenverlauf bei im Vergleich zu Kurve IIIa erhöhter Temperatur des Drehzahlfühlers. Die höhere Temperatur hat einen höheren Innenwiderstand zur Folge. Wird der Innen widerstand mit zunehmender Temperatur größer, so kann das Meßsignal verfälscht werden.

Fig. 8 erläutert schematisch eine herkömmliche Schaltungsanordnung zum Auswerten eines in einem Drehzahlfühler induzierten Signals. Mit dem Bezugszeichen 10 ist der Drehzahlfühler bezeichnet, dessen Innenwiderstand temperaturabhängig schwanken kann. Das elektromagnetische Signal wird in einem Spule 26 induziert. Die Auswerteschaltung ist durch die Bezugszeichen 12, 14 angedeutet und weist einen gegebenen Eingangswiderstand auf. Typischerweise beträgt der Eingangswiderstand der Auswerteschaltung 12, 14 z.B. 1,4 kOhm. Ändert sich nun, wie vorstehend beschrieben, der Innenwiderstand des Drehzahlfühlers 10, so wird die Messung des in der Spule 26 induzierten Signals durch die Auswerteschaltung 12, 14 verfälscht und liefert z.B. die Kurve IIIb in Fig. 7.

Fig. 9 zeigt eine Lösung dieses Problems, die dazu führt, daß die Amplitude des im Drehzahlfühler 10 induzierten Signals gemäß Kurve IV in Fig. 7 unverfälscht mit der Frequenz ansteigt. Erfindungsgemäß wird nämlich ein Impedanzwandler 28 im Schaltkreis angeordnet, der einen hohen Widerstand von z.B. 100 kOhm aufweist, also einen Widerstand, der groß ist gegenüber dem möglicherweise schwankenden Innenwiderstand des Drehzahlfühlers 10. Änderungen des Innenwiderstandes des Drehzahlfühlers aufgrund von Temperatureschwankungen können deshalb das Meßsignal nicht mehr wesentlich verfälschen.

Alternativ ist es auch möglich, direkt die Temperatur am Drehzahlfühler zu messen und in den Mikroprozessor ein Kompensationsprogramm einzugeben, welches die gemessenen Amplitudenwerte in Abhängigkeit von den gemessenen Temperaturwerten direkt korrigiert. Hierzu muß aber vorab die Temperaturabhängigkeit des Innenwiderstandes des Drehzahlfühlers ermittelt und im Prozessor als Eichkurve abgespeichert werden.

## Patentansprüche

1. Verfahren zum Messen der Drehzahl eines Rades in einer blockiergeschützten Fahrzeugbremsanlage mit einem Drehzahlfühler (10), in dem entsprechend der Drehzahl des Rades elektromagnetisch Signale induziert werden, deren Amplitude und Frequenz regulär mit der Drehzahl wachsen, dadurch **gekennzeichnet,** daß dann, wenn die Amplitude des Signals nicht mit seiner Frequenz wächst, der Drehzahl-Meßwert mittels der gemessenen Amplitude bestimmt wird.

2. Verfahren zum Messen der Drehzahl eines Rades in einer blockiergeschützten Fahrzeugbremsanlage mit einem Drehzahlfühler (10), in dem entsprechend der Drehzahl des Rades elektromagnetisch Signale induziert werden, deren Amplitude und Frequenz regulär mit der Drehzahl wachsen, dadurch **gekennzeichnet,** daß dann, wenn die Amplitude des Signals nicht mit seiner Frequenz wächst, der Drehzahl-Meßwert mittels der zuletzt gemessenen Frequenz des induzierten Signals, bei der die Amplitude noch mit der Frequenz gewachsen war, bestimmt wird.

3. Vorrichtung zum Messen der Drehzahl eines Rades in einer blockiergeschützten Fahrzeugbremsanlage mit einem Drehzahlfühler (10), in dem entsprechend der Drehzahl des Rades elektromagnetisch Signale induziert werden, deren Amplitude und Frequenz regulär mit der Drehzahl wachsen, **gekennzeichnet** durch eine Auswerteschaltung (12) in der die Abhängigkeit der Amplitude des elektromagnetisch induzierten Signals von dessen Frequenz ermittelt wird und dann, wenn die Amplitude nicht gemäß einer vorgegebenen Proportionalität mit der Frequenz wächst, die Drehzahl aufgrund der gemessenen Amplitude bestimmt wird.

4. Vorrichtung zum Messen der Drehzahl eines Rades in einer blockiergeschützten Fahrzeugbremsanlage mit einem Drehzahlfühler (10), in dem entsprechend der Drehzahl des Rades elektromagnetisch Signale induziert werden, deren Amplitude und Frequenz regulär mit der Drehzahl wachsen, **gekennzeichnet** durch eine Auswerteschaltung (12), in der die Abhängigkeit der Amplitude des elektromagnetisch induzierten Signals von dessen Frequenz ermittelt wird und dann, wenn die Amplitude nicht gemäß einer vorgegebenen Proportionalität mit der Frequenz wächst, die Drehzahl aufgrund der zuletzt gemessenen Frequenz des induzierten Signals, bei der die Amplitude noch mit der vorgegebenen Proportionalität mit der Frequenz gewachsen ist, bestimmt wird.

5. Vorrichtung nach einem der Ansprüche 3 oder 4, **gekennzeichnet** durch eine Einrichtung (28), die bewirkt, daß temperaturabhängige Schwankungen des Widerstandes des Drehzahlfühlers (10) ohne Einfluß auf das Drehzahl-Meßergebnis bleiben.

6. Vorrichtung nach Anspruch 5, dadurch **gekennzeichnet,**
daß ein Impedanzwandler (28) als Einrichtung zum Unwirksammachen von Schwankungen des Widerstandes vorgesehen ist.

## Claims

1. Method for measuring the rotational speed of a wheel in an antilocking-protected vehicle brake system comprising a rotational speed sensor (10) in which corresponding to the rotational speed of the wheel electromagnetic signals are induced having an amplitude and frequency increasing regularly with the rotational speed, characterized in
that when the amplitude of the signal does not increase with its frequency the rotational speed measured value is determined by means of the measured amplitude.

2. Method for measuring the rotational speed of a wheel in an antilocking-protected vehicle brake system comprising a rotational speed sensor(10) in which corresponding to the rotational speed of the wheel electromagnetic signals are induced having an amplitude and frequency increasing regularly with the rotational speed, characterized in
that when the amplitude of the signal does not increase with its frequency the rotational speed measured value is determined by means of the last measured frequency of the induced signal at which the amplitude still increased with the frequency.

3. Device for measuring the rotational speed of a wheel in an antilocking-protected vehicle brake system comprising a rotational speed sensor (10) in which corresponding to the rotational speed of the wheel electromagnetic signals are induced having an amplitude and frequency increasing regularly with the rotational speed, characterized by
an evaluating circuit (12) in which the dependence of the amplitude of the electromagnetically induced signal on the frequency thereof is determined and when the amplitude does not increase with the frequency in accordance with a predetermined proportionality the rotational speed is determined on the basis of the measured amplitude.

4. Device for measuring the rotational speed of a wheel in an antilocking-protected vehicle brake system comprising a rotational speed sensor (10) in which corresponding to the rotational speed of the wheel electromagnetic signals are induced having an amplitude and frequency increasing regularly with the rotational speed, characterized by
an evaluating circuit (12) in which the dependence of the amplitude of the electromagnetically induced signal on the frequency thereof is determined and when the amplitude does not increase with the frequency in accordance with a predetermined proportionality the rotational speed is determined on the basis of the last measured frequency of the induced signal at which the amplitude still increased with the frequency with the predetermined proportionality.

5. Device according to claim 3 or 4, characterized by
a means (28) which effects that temperature-dependent fluctuations of the resistance of the rotational speed sensor (10) have no influence on the rotational speed measurement result.

6. Device according to claim 5, characterized in
that an impedance converter (28) is provided as means for rendering fluctuations of the resistance ineffective.

## Revendications

1. Procédé de mesure de la vitesse de rotation d'une roue dans une installation de freinage anti-blocage de véhicule, comprenant un capteur (10) de la vitesse de rotation dans lequel des signaux électromagnétiques, dont l'amplitude et la fréquence croissent régulièrement avec la vitesse de rotation, sont induits en fonction de la vitesse de rotation de la roue, caractérisé en ce que,
lorsque l'amplitude du signal ne croît pas avec sa fréquence, la mesure de la vitesse de rotation est déterminée au moyen de l'amplitude mesurée.

2. Procédé de mesure de la vitesse d'une roue dans une installation de freinage anti-blocage de véhicule, comprenant un capteur de vitesse de rotation (10) dans lequel des signaux électromagnétiques, dont l'amplitude et la fréquence croissent régulièrement avec la vitesse de rotation, sont induits en fonction de la vitesse de rotation de la roue, caractérisé en ce que,
lorsque l'amplitude du signal ne croît pas avec sa fréquence, la mesure de la vitesse de rotation est déterminée au moyen de la dernière fréquence mesurée du signal induit pour laquelle l'amplitude croissait encore avec la fréquence.

3. Dispositif de mesure de la vitesse de rotation d'une roue dans une installation de freinage anti-blocage de véhicule, comprenant un capteur (10) de vitesse de rotation dans lequel des signaux électromagnétiques, dont l'amplitude et la fréquence croissent régulièrement avec la vitesse de rotation, sont induits en fonction de la vitesse de rotation de la roue, caractérisé par

un circuit d'analyse (12) dans lequel la relation entre l'amplitude du signal électromagnétique induit et sa fréquence est déterminée et, lorsque l'amplitude ne croît pas selon une proportionnalité prescrite avec la fréquence, la vitesse de rotation est déterminée sur la base de l'amplitude mesurée.

4. Dispositif de mesure de la vitesse de rotation d'une roue dans une installation de freinage antiblocage de véhicule, comprenant un capteur (10) de la vitesse de rotation dans lequel des signaux électromagnétiques, dont l'amplitude et la fréquence croissent régulièrement avec la vitesse de rotation, sont induits en fonction de la vitesse de rotation de la roue, caractérisé par

un circuit d'analyse (12) dans lequel la relation entre l'amplitude du signal électromagnétique induit et sa fréquence est déterminée et ensuite, lorsque l'amplitude ne croît pas selon une proportionnalité prédéterminée avec la fréquence, la vitesse de rotation est déterminée sur la base de la dernière fréquence mesurée du signal induit à laquelle l'amplitude croissait encore selon la proportionnalité prescrite avec la fréquence.

5. Dispositif selon l'une des revendications 3 ou 4, caractérisé par

un dispositif (28) qui a pour action que les fluctuations, en fonction de la température, de la résistance du capteur (10) de la vitesse de rotation demeurent sans influence sur la mesure de la vitesse de rotation.

6. Dispositif selon la revendication 5, caractérisé

en ce qu'un transformateur d'impédance (28) est prévu comme dispositif destiné à rendre inopérantes les fluctuations de la résistance.

U [Volt]

Geschwindigkeit [km/h]

FIG.1

U [Volt]

I

II

Zeit [msek]

FIG.2

Drehzahleingang

12

10

14

**FIG.3**

18 — + 5V

16

Drehzahleingang

12

10

14

**FIG.4**

FIG.5a

U [Volt]

Hysterese

Zeit

FIG.5b

FIG.5c

Drehzahleingang

20

12'

14'

FIG.6

10

FIG.7

FIG.8

FIG.9